# EUROPÄISCHE PATENTSCHRIFT

(11) **EP 2 240 341 B1**
(45) Veröffentlichungstag und Bekanntmachung des Hinweises auf die Patenterteilung: **19.03.2014**
(21) Anmeldenummer: 09707486.8
(22) Anmeldetag: 14.01.2009
(51) Int. Cl.: B60N 2/12, B60N 2/20, B60N 2/225, B60N 2/235, B60N 2/433

(54) **VERRIEGELUNGSVORRICHTUNG, INSBESONDERE FÜR EINEN FAHRZEUGSITZ**
LOCKING DEVICE, IN PARTICULAR FOR A VEHICLE SEAT
DISPOSITIF DE VERROUILLAGE, NOTAMMENT POUR UN SIÈGE DE VÉHICULE

(30) Priorität: 08.02.2008 DE 102008008936
(43) Veröffentlichungstag der Anmeldung: 20.10.2010
(73) Patentinhaber: KEIPER GmbH & Co. KG, 67657 Kaiserslautern (DE)
(72) Erfinder: THIEL, Peter, 42899 Remscheid (DE)
(74) Vertreter: Liedtke, Markus
(86) Internationale Anmeldenummer: PCT/EP2009/000160
(87) Internationale Veröffentlichungsnummer: WO 2009/097948

(56) Entgegenhaltungen:
- EP-A- 0 872 375
- WO-A-2007/087876
- DE-U1-202005 012 733

## Beschreibung

Die Erfindung betrifft eine Verriegelungsvorrichtung, insbesondere für einen Fahrzeugsitz, mit den Merkmalen des Oberbegriffs des Anspruches 1.

Aus der DE 10 2006 044 489 A1 und der WO 2007/087876 A1 ist ein Beschlag mit einer Verriegelungsvorrichtung dieser Art für ein zweitüriges Kraftfahrzeug bekannt, welcher dazu dient, durch das vorwärts erfolgende Freischwenken der Lehne den Zugang zum Fond zu ermöglichen und für den Gebrauch durch einen Insassen verschiedene Neigungseinstellungen der Lehne zur Verfügung zu stellen. Zum Freischwenken wird die Verriegelungsvorrichtung entriegelt, indem eine Entriegelungswelle gedreht wird. Um ein ungewolltes Zurückschwenken der Lehne, beispielsweise bei einer zu starken Polsterung im Übergangsbereich zwischen der Lehne und dem Sitzteil, zu verhindern, ist in der freigeschwenkten Stellung eine Festlegung der Lehne vorgesehen. Die Entriegelungswelle ist innen in der Lagerbuchse gelagert. In einer von mehreren alternativen Ausführungen ist das Fangelement schwenkbar auf einem über die Lagerbuchse überstehenden Teil der Entriegelungswelle gelagert, während der Spannexzenter außen auf der Lagerbuchse gelagert ist.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Die Verriegelungsvorrichtung ist versehen mit einer Klinke, einem vorgespannten Spannelement zum Sichern der verriegelten Klinke im Normalfall und einem Fangelement zum Abstützen der Klinke im Crashfall. Zum Entriegeln der Klinke ist eine Entriegelungswelle vorgesehen, deren Drehung um ihre eigene Achse das einteilig mit der Entriegelungswelle ausgebildete Fangelement von der Klinke wegschwenkt. Das Spannelement ist vorzugsweise mit einem Leerweg auf Mitnahme gekoppelt, beispielsweise mittels einer Schlitz-Zapfen-Führung, so dass es letztendlich auch durch die sich drehende Entriegelungswelle von der Klinke weggeschwenkt wird, damit diese entriegelt. Für die Lagerung der Entriegelungswelle und des Spannelements ist eine Lagerbuchse vorgesehen. Die erfindungsgemäße Lagerung der Entriegelungswelle innen in der Lagerbuchse und des Spannelements außen auf der Lagerbuchse hat den Vorteil, dass mit Beginn der Drehung der Entriegelungswelle das Spannelement nicht versehentlich bereits mitgenommen wird, beispielsweise aufgrund von Reibung, sondern beispielsweise erst, wenn der Leerweg durchfahren ist. Außerdem kann, wenn im Crashfall das Spannelement weggeschwenkt werden sollte, das Fangelement unbeeinflusst in seiner Position bleiben.

Die Verriegelungsvorrichtung ist vorzugsweise Bestandteil eines Beschlags für einen Fahrzeugsitz mit einem Sitzteil und einer Lehne, wobei der Beschlag vorzugsweise versehen ist mit einem Einstellbeschlag zur Neigungseinstellung der Lehne relativ zum Sitzteil, einer Freischwenkeinheit zum zentrischen Freischwenken der Lehne von wenigstens einer Gebrauchsstellung in eine freigeschwenkte Stellung, was mittels eines Freischwenk-Bedienelementes ausgelöst wird, einem Beschlagunterteil, das mit dem Sitzteil zu verbinden ist und das den Einstellbeschlag trägt, und einem der Freischwenkeinheit zugeordneten Beschlagoberteil, das mit der Lehne zu verbinden ist und das in der Gebrauchsstellung mittels der Verriegelungsvorrichtung verriegelt ist.

Die Klinke ist vorzugsweise schwenkbar am Beschlagoberteil angelenkt und verriegelt mit einer Rastplatte der Freischwenkeinheit. Vorzugsweise ist ein Deckel vorgesehen, der mit dem Beschlagoberteil verbunden ist und die Verriegelungsvorrichtung abdeckt. Der Einstellbeschlag ist mit seinen zwei relativ zueinander verdrehbaren Beschlagteilen vorzugsweise einerseits fest mit der Rastplatte und andererseits fest mit dem Beschlagunterteil verbunden. Damit kann die Freischwenkeinheit als vormontierte Baugruppe hergestellt und geprüft werden.

Vorzugsweise ist eine Festlegeklinke vorgesehen, die das Beschlagoberteil in der freigeschwenkten Stellung der Lehne am Beschlagunterteil festlegt. Die Festlegeklinke ist vorzugsweise mittels des Längseinstellers des Fahrzeugsitzes automatisch zu öffnen, insbesondere wenn der Längseinsteller den Fahrzeugsitz in die zuvor eingestellte Sitzlängsposition bringt, welche von einer Memoryvorrichtung erkannt wird. Außerdem ist die Festlegeklinke manuell mittels des Freischwenk-Bedienelements zu öffnen, insbesondere in besonderen Situationen, wenn beispielsweise die zuvor eingestellte Sitzlängsposition nicht mehr erreicht wird. Eine von der eingestellten Neigung der Lehne unabhängige freigeschwenkte Stellung ergibt sich bei einer Festlegung des Beschlagoberteils am Beschlagunterteil.

Die Festlegeklinke ist vorzugsweise schwenkbar am Beschlagoberteil angelenkt und wirkt zum Festlegen mit einem Anschlag am Beschlagunterteil zusammen. Dies erleichert die Ankopplung an den Längseinsteller. Der Anschlag begrenzt vorzugsweise auch die Neigungseinstellung, beispielsweise indem er innerhalb einer Aussparung der Rastplatte angeordnet ist. Die doppelte Funktion erspart ein weiteres Bauteil. Die Festlegeklinke liegt in der Gebrauchsstellung vorzugsweise an einem Bauteil der Freischwenkeinheit an, beispielsweise dem Rastelement oder einem Schaltring, was für die Freischwenkeinheit als vormontierte Baugruppe von Vorteil ist. Während des Freischwenkens der Lehne kann die Festlegeklinke beim Erreichen des Anschlags mit der weiteren Schwenkbewegung der Lehne leicht aufschwenken und auf der Unterseite des Anschlags entlang gleiten, bis sie nach dem Passieren des Anschlags den Anschlag hintergreift. Es sind aber auch andere Möglichkeiten des Zusammenwirkens von Festlegeklinke und Anschlag möglich. Die Festlegeklinke und der Anschlag wirken vorzugsweise außerhalb des Selbsthemmungsbereichs zusammen. Eine Vorspannung kann für ein kraftschlüssiges Zusammenwirken sorgen. Damit ist jeweils sichergestellt, dass die Festlegeklinke durch eine Relativbewegung von Beschlagoberteil und Anschlag und/oder oberhalb einer Grenzkraft öffnet.

Die Festlegeklinke wird vorzugsweise von einem Schalthebel gesichert, der vorzugsweise vorgespannt ist. Das Sichern kann formschlüssig oder kraftschlüssig erfolgen. Die durch den Schalthebel gesicherte Festlegeklinke kann geöffnet werden, indem das Zusammenwirken der Festlegeklinke und des Schalthebels aufgehoben wird, beispielsweise indem der Schalthebel von der Festlegeklinke weggeschwenkt wird. Dies kann bei Vorliegen bestimmter Bedingungen automatisch erfolgen, beispielsweise bei einer bestimmten Sitzlängsposition, so dass die Lehne dann in ihre Ausgangsposition zurückgeschwenkt werden kann.

Mittels eines drehbaren Schaltrings, welcher bei Betätigung des Freischwenk-Bedienelementes das Zusammenwirken der Festlegeklinke und des Schalthebels aufhebt, kann die Festlegung manuell beendet werden. Die Drehung des Schaltrings wird beispielsweise durch das Fangelement bewirkt, wofür diese beiden Bauteile vorzugsweise Vorsprünge mit geeignet anwachsenden Flanken aufweisen. Der gedrehte Schaltring wirkt vorzugsweise mittels einer Schaltkontur auf den Schalthebel ein, um diesen von der Festlegeklinke zu entfernen.

Die Erfindung ist vorzugsweise bei längseinstellbaren Fahrzeugsitzen von zweitürigen Kraftfahrzeugen mit zentrischem Freischwenken der Lehne einsetzbar, kann aber auch für andere Fahrzeugsitze verwendet werden. Bei einer Verwendung des erfindungsgemäßen Beschlags zur Aktivierung der sogenannten "Easy-Entry-Funktion", bei welcher außer einem Freischwenken der Lehne noch ein Verfahren des Fahrzeugsitzes erfolgt, kann das Zurückschwenken der Lehne genau bei Erreichen der zuvor eingestellten Sitzlängsposition erfolgen.

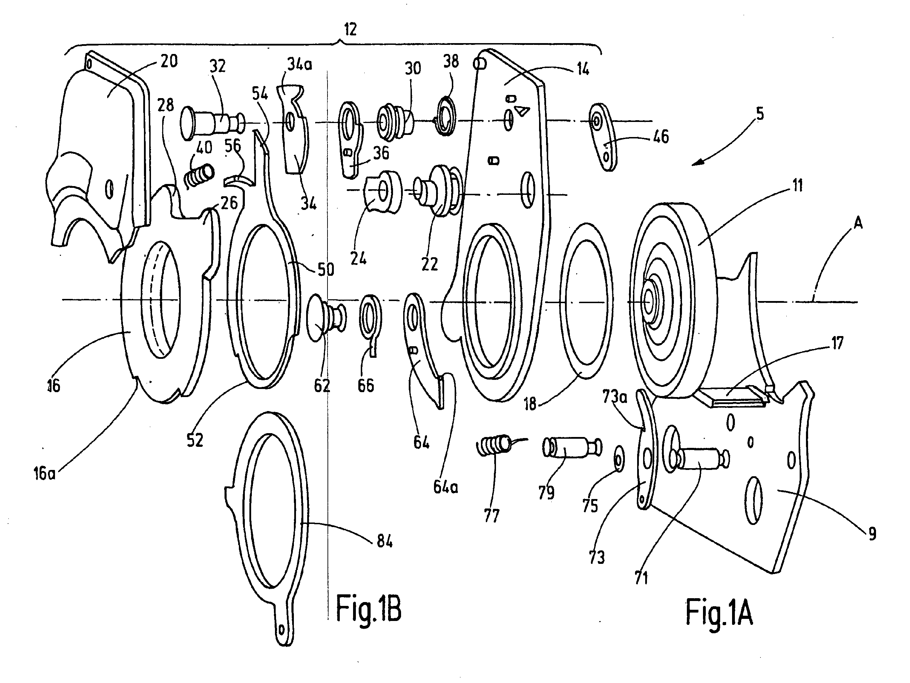

Im folgenden ist die Erfindung anhand eines in den Zeichnungen dargestellten Ausführungsbeispiels näher erläutert, wobei das die Erfindung kennzeichnende Merkmal darin jedoch nicht gezeigt ist. Es zeigen
- Fig. 1A: eine Explosionsdarstellung des Ausführungsbeispiels ohne Seilzüge,
- Fig. 1B: eine perspektivische Ansicht eines Entriegelungsrings,

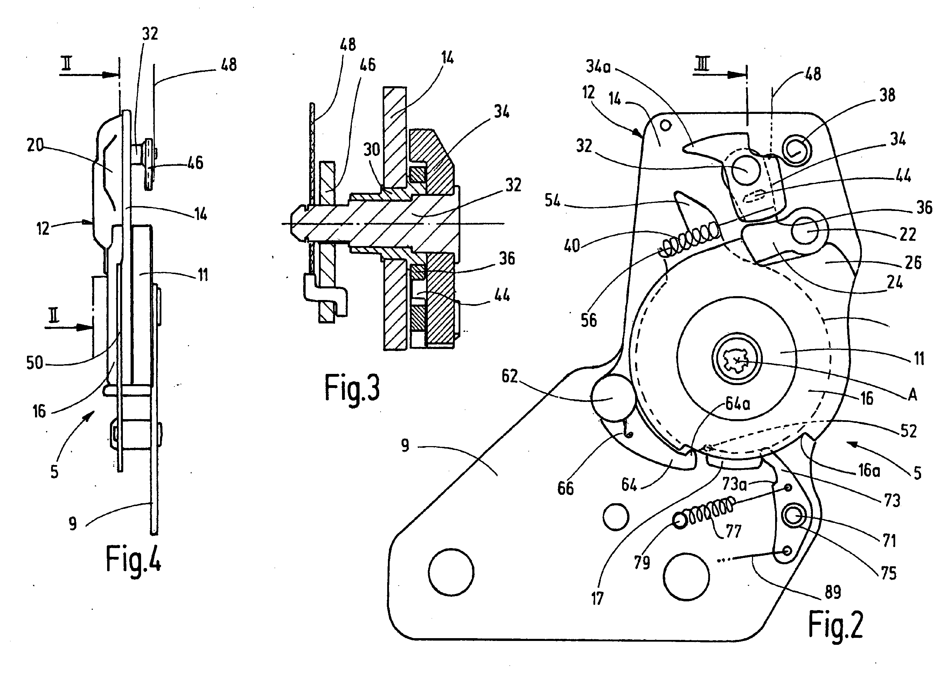

- Fig. 2: einen Schnitt durch das Ausführungsbeispiel entlang der Linie II-II in Fig. 4 in einer Gebrauchsstellung in einem verriegelten Zustand,
- Fig. 3: einen Schnitt durch den oberen Teil des Ausführungsbeispiels entlang der Linie III-III in Fig. 4,
- Fig. 4: eine seitliche Ansicht des Ausführungsbeispiels,

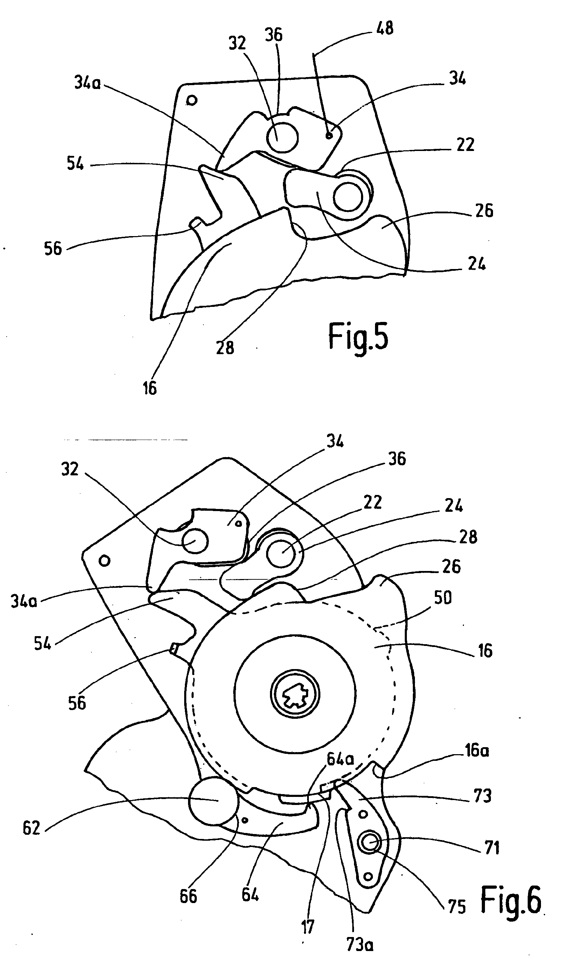

- Fig. 5: einen Teil eines Schnitts durch das Ausführungsbeispiel beim Entriegeln für ein Freischwenken der Lehne,
- Fig. 6: einen Teil eines Schnitts durch das Ausführungsbeispiel während des Freischwenkens der Lehne,

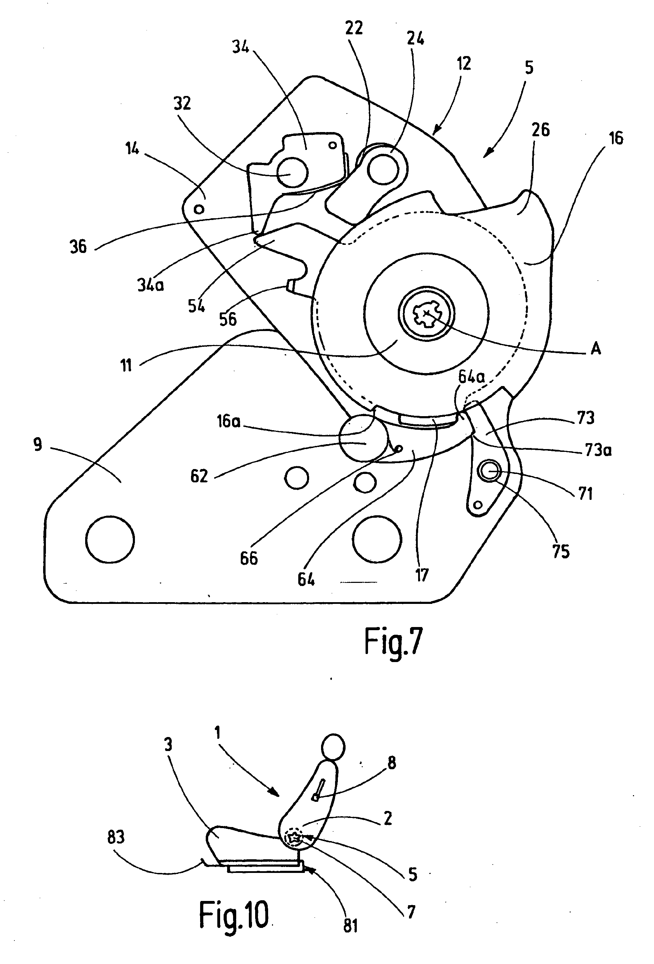

- Fig. 7: einen Schnitt durch das Ausführungsbeispiel entsprechend Fig. 2 in einem festgelegten Zustand in der freigeschwenkten Stellung der Lehne,

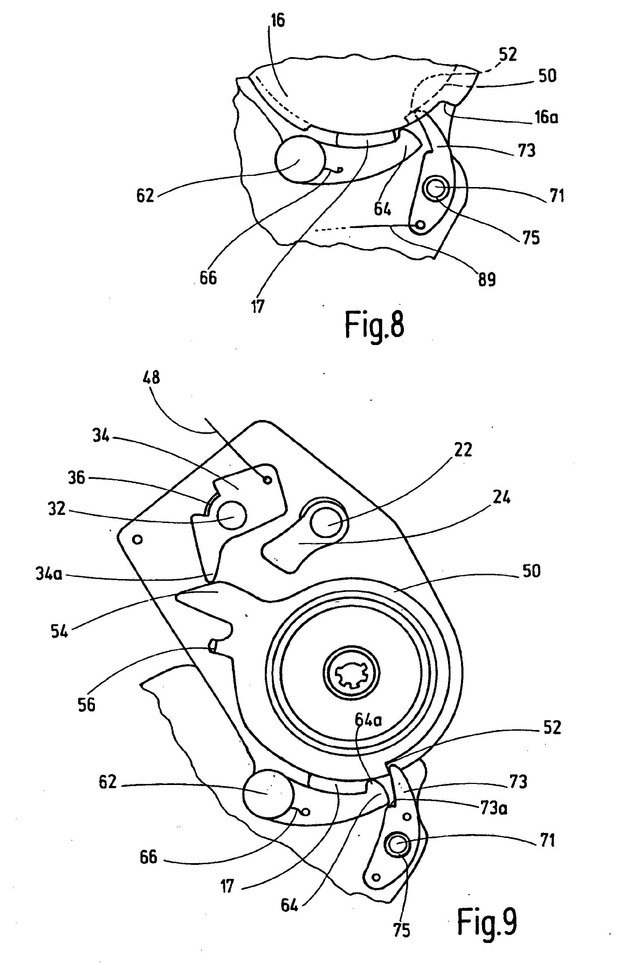

- Fig. 8: einen Teil eines Schnitts durch das Ausführungsbeispiel beim automatischen Öffnen der Festlegung mittels des Längseinstellers,
- Fig. 9: einen Teil eines Schnitts durch das Ausführungsbeispiel beim manuellen Öffnen der Festlegung mittels des Freischwenk Bedienelements, wobei die Rastplatte nicht dargestellt ist,
- Fig. 10: eine schematische Seitenansicht eines Fahrzeugsitzes,
- Fig. 11: eine Seitenansicht des Ausführungsbeispiels entsprechend Fig. 7 ohne Rastplatte in einem festgelegten Zustand in der freigeschwenkten Stellung der Lehne, wobei der Einstellbeschlag eine obere Position in seiner Taumelschleife einnimmt, und
- Fig. 12: eine Seitenansicht des Ausführungsbeispiels entsprechend Fig. 11, wobei der Einstellbeschlag eine untere Position in seiner Taumelschleife einnimmt.

Ein Fahrzeugsitz 1 für ein zweitüriges Kraftfahrzeug weist für die Neigungseinstellung, d.h. die langsame, feine Winkeländerung zwischen mehreren Gebrauchsstellungen, und das Freischwenken, d.h. die schnelle, große Winkeländerung von einer Gebrauchsstellung in eine freigeschwenkte Stellung als einer speziellen Nichtgebrauchsstellung, seiner Lehne 2 relativ zu seinem Sitzteil 3 auf seinen beiden Seiten je einen Beschlag 5 auf. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenkfunktion an der Lehne 2 ein Freischwenk-Bedienelement 8, beispielsweise ein Handhebel, beweglich angebracht ist.

Jeder Beschlag 5 umfasst ein Beschlagunterteil 9, das zur Befestigung des Beschlags 5 an der Struktur des Sitzteils 3 dient ("sitzteilfest"), einen Lehnenneigungseinstellbeschlag, im folgenden kurz als Einstellbeschlag 11 bezeichnet, und eine Freischwenkeinheit 12, welche ihrerseits ein Beschlagoberteil 14 aufweist, das zur Befestigung des Beschlags 5 an der der Struktur der Lehne 2 dient ("lehnenfest").

Der Einstellbeschlag 11 ist in baulicher Hinsicht als eine scheibenförmige Einheit ausgebildet, wie sie beispielsweise in der DE 10105 282 B4 beschrieben ist. Der Einstellbeschlag 11 weist zwei Beschlagteile auf, die relativ zueinander verdrehbar sind und mittels eines Umklammerungsrings in axialer Richtung zusammengehalten werden. Im Ausführungsbeispiel ist der Einstellbeschlag 11 als Getriebebeschlag ausgebildet, d.h. die beiden Beschlagteile des Einstellbeschlags 11 stehen mittels eines - vorliegend selbsthemmenden - Exzenterumlaufgetriebes miteinander in Getriebeverbindung, welches vorliegend ein spielfreies Feststellen der beiden Beschlagteile des Einstellbeschlags 11 ermöglicht und zum stufenlosen Verstellen eine Relativdrehung der beiden Beschlagteile des Einstellbeschlags 11 mit überlagerter Taumelbewegung erzwingt. Der Weg dieser Taumelbewegung sei als Taumelschleife bezeichnet. Ein solcher Getriebebeschlag ist beispielsweise in der DE 44 36 101 A1 beschrieben. Die Drehung des Handrades 7 treibt den Getriebebeschlag an. Es sind aber auch andere Getriebebeschläge und - theoretisch - auch Rastbeschläge als Einstellbeschlag 11 einsetzbar. In letzterem entriegelt eine kleine Drehung des Handrades 7 oder eines ersatzweise vorgesehenen Hebels den Rastbeschlag. Der Einstellbeschlag 11 ist mit einem seiner beiden Beschlagteile und dem Umklammerungsring fest mit dem Beschlagunterteil 9 verbunden, d.h. eines der beiden Beschlagteile des Einstellbeschlags 11 ist sitzteilfest. Hierzu weist das Beschlagunterteil 9 eine gabelförmige Aufnahme für den Einstellbeschalg 11 auf.

Die Freischwenkeinheit 12 weist eine - näherungsweise ringförmige - Rastplatte 16 auf, relativ zu welcher das Beschlagoberteil 14 um eine Achse A drehbar gelagert ist. Die Achse A und ihre Lage innerhalb des Fahrzeugsitzes 1 definieren die vorliegend verwendeten Richtungsangaben. Da die Achse A - gegebenenfalls abgesehen von der Taumelbewegung, mit der zentralen Achse des Einstellbeschlags 11 zusammenfällt, handelt es sich vorliegend um ein zentrischen Freischwenken. Ein Anschlag 17 ist am Beschlagunterteil 9 befestigt und steht von diesem axial ab. Die Rastplatte 16 weist an einem Teil ihres Umfangs eine radial nach innen versetzte, durch je eine Stufe begrenzte Aussparung 16a auf, innerhalb derer der Anschlag 17 angeordnet ist. Durch Zusammenwirken des Anschlags 17 mit den Stufen der Rastplatte 16 wird der Winkel für die Neigungseinstellung der Lehne 2 begrenzt. Die Rastplatte 16 (und damit die Freischwenkeinheit 12) ist fest mit demjenigen der beiden Beschlagteile des Einstellbeschlags 11 verbunden, dass nicht sitzteilfest ist. Die Verbindung der Freischwenkeinheit 12 mit dem Einstellbeschlag 11 erfolgt beispielsweise durch Laserschweißen.

Für die Lagerung des Beschlagoberteils 14 weist die Rastplatte 16 vorliegend einen bezüglich der Achse A axial abstehenden Kragen auf, auf welchem das Beschlagoberteil 14 drehbar gelagert ist. Das Beschlagoberteil 14 weist ebenfalls einen Kragen auf, der zur Rastplatte 16 hin absteht, so dass zwischen Rastplatte 16 und Beschlagoberteil 14 ein Bauraum vorhanden ist. Eine Haltescheibe 18 dient als axiale Sicherung des Beschlagoberteils 14. Die als Ringscheibe ausgebildete Haltescheibe 18 wird nach dem Aufsetzen des Beschlagoberteils 14 auf den Kragen der Rastplatte 16 mit der Rastplatte 16 verbunden, wobei sie das Beschlagoberteil 14 hintergreift. Ein mit dem Beschlagoberteil 14 verbundener Deckel 20 definiert einerseits einen Bauraum zwischen sich und dem über die Ratsplatte 16 nach oben überstehenden Beschlagoberteil 14. Anderseits ist der untere Rand des Deckels 20 als Halteklammer ausgebildet und übergreift, gegebenenfalls unter Zwischenlage eines Gleiters, z.B. aus Kunststoff, die Rastplatte 16. Der Deckel 20 dient somit als weitere axiale Sicherung des Beschlagoberteils 14.

Auf dem Beschlagoberteil 14 ist mittels eines Lagerbolzens 22 eine Klinke 24 schwenkbar gelagert, welche mit der Rastplatte 16 verriegelbar ist. Der zur Achse A parallele Lagerbolzen 22 begrenzt zugleich die Schwenkbewegung des Beschlagoberteils 14 nach hinten, und zwar sowohl im Normalfall als auch im (Heck-)Crashfall, indem er an einem ersten Rastanschlag 26 der Rastplatte 16 anliegt. Zum Verriegeln der Klinke 24 und zur Begrenzung der Schwenkbewegung des Beschlagoberteils 14 nach vorne im (Front-)Crashfall ist in radialer Verlängerung der Klinke 24 am Rastelement 16 ein zweiter Rastanschlag 28 vorgesehen. Die Klinke 24 verriegelt mit der Rastplatte 16, indem sie sich einerseits mittels des Lagerbolzens 22 am ersten Rastanschlag 26 abstützt und andererseits mit ihrem freien Ende am zweiten Rastanschlag 28 spielfrei anliegt. Die Anlage erfolgt dazu in einem Winkel außerhalb des Selbsthemmungsbereichs. Eine alternative Abstützung am ersten Rastanschlag 26 kann mittels einer Ausprägung o.ä. des Beschlagoberteils 14 erfolgen. Beide Rastanschläge 26 und 28 sind vorliegend an der Rastplatte 16 angeformt, d.h. einstückig mit ihr ausgebildet. Der Lagerbolzen 22 ist als Exzenterbolzen ausgebildet, d.h. er ist um eine zur Schwenkachse der Klinke 24 versetzte Achse im Beschlagoberteil 14 relativ zu diesem drehbar gelagert. Zum Ausgleich der Fertigungstoleranzen ist der Lagerbolzen 22 so eingestellt und fixiert, dass die Klinke 24 mit maximalem Klinkeneiogriff am zweiten Rastanschlag 28 anliegt.

Im Beschlagoberteil 14 sitzt vorzugsweise drehfest eine Lagerbuchse 30, welche beispielsweise in eine Öffnung des Beschlagoberteils 14 eingenietet oder eingeschweißt ist. Eine Entriegelungswelle 32 ist mittels dieser Lagerbuchse 30 parallel zur Achse A und zum Lagerbolzen 22 drehbar gelagert. Auf der Entriegelungswelle 32 sitzt mit der Entriegelungswelle 32 eintellig ausgebildet (nicht gezeigt) ein Fangelement 34, während ein - axial benachbart zum Fangelement 34 angeordnetes - Spannelement 36 schwenkbar auf der Lagerbuchse 30 gelagert ist. Somit ist die Entriegelungswelle 32 innen in der Lagerbuchse 30 und das Spannelement 36 außen auf der Lagerbuchse 30 gelagert. Das Fangelement 34 und das Spannelement 36 sind bei verriegeltem Beschlagoberteil 14 auf die Klinke 24 ausgerichtet. Die Funktionsweise von Fangelement 34 und Spannelement 36 ist in der DE 44 39 644 A1 beschrieben. Das Spannelement 36 liegt mit einer exzentrisch zur Entriegelungswelle 32 gekrümmten Spannfläche in einem Winkel außerhalb des Selbsthemmungsbereichs an einer Anlagefläche der Klinke 24 an. Das Spannelement 36 wird von einer als Spiralfeder ausgebildeten Spannfeder 38 beaufschlagt, so dass das Spannelement 36 mit Vorspannung an der Klinke 24 anliegt. Dadurch ist das Beschlagoberteil 14 spielfrei mit der Rastplatte 16 verriegelt. Das Fangelement 34 wird von einer als Schrauben-Zugfeder ausgebildeten Fangfeder 40 beaufschlagt. Das Fangelement 34 und das Spannelement 36 sind miteinander mittels einer Schlitz-Zapfen-Führung 44 mit einem Leerweg auf Mitnahme gekoppelt. Hierfür weist das Spannelement 36 einen um die Entriegelungswelle 32 gekrümmten Schlitz auf, in welchen ein Zapfen des Fangelements 34 greift. Der Deckel 20 deckt die Klinke 24, das Fangelement 34, das Spannelement 36 und die Federn 38 und 40 ab und schützt diese vor Verschmutzung.

In den Gebrauchsstellungen wird im Normalfall, d.h. beim normalen Sitzgebrauch, die Klinke 24 durch das Spannelement 36 in ihrer Position gehalten (gesichert), und das Fangelement 34 ist in geringem Abstand (bezogen auf die Abmessungen der Klinke 24) zur Klinke 24 angeordnet, wobei es vorzugsweise an einem Anschlag des Beschlagoberteils 14 anliegt. Im Crashfall, wenn Crashkräfte auf die Klinke 24 wirken, die beispielsweise ein hohes Drehmoment auf das Beschlagoberteil 14 ausüben, kann das Spannelement 36 wegen der fehlenden Selbsthemmung öffnen. Nach einer sehr geringfügigen Schwenkbewegung der Klinke 24 gelangt diese in Anlage an das Fangelement 34. Das Fangelement 34 stützt dann die Klinke 24 ab, welche innerhalb des Selbsthemmungsbereichs am Fangelement 34 anliegt, vorzugsweise tangential oder konzentrisch und möglichst flächig. Damit wird verhindert, dass die Klinke 24 öffnet. Somit verriegelt die vorbeschriebene Verriegelungsvorrichtung (bestehend aus der Klinke 24, der Rastplatte 16 als Gegenelement und dem Fangelement 34 und Spannelement 36 als Sicherungselemeriten) das Beschlagoberteil 14 (und damit die Freischwenkeinheit 12) sowohl im Normalfall als auch im Crashfall.

Auf der vom Deckel 20 abgewandten Seite des Beschlagoberteils 14 ist mit der Entriegelungswelle 32 ein Entriegelungshebel 46 drehfest verbunden, an welchem ein mit dem Freischwenk-Bedienelement 8 in Wirkverbindung stehender erster Seilzug 48 befestigt ist. Alternativ kann die Entriegelungswelle 32 auch über einen elektrischen Aktuator, beispielsweise einen Stellmotor oder dergleichen, betätigt werden. Zum Entriegeln des Beschlagoberteils 14 mittels des Freischwenk-Bedienelements 8 wird mittels des ersten Seilzugs 48 (und des Entriegelungshebels 46) die Entriegelungswelle 32 um ihre eigene Achse gedreht. Die Entriegelungswelle 32 nimmt das drehfest mir ihr verbundene Fangelement 34 mit, welches mittels der Schlitz-Zapfen-Führung 44 - nach Durchfahren des Leerwegs - das Spannelement 36 mitnimmt und dabei öffnet, d.h. das Spannelement 36 von der Klinke 24 trennt und entfernt. Die Klinke 24 ist dadurch freigegeben und kann wegen der fehlenden Selbsthemmung selbsttätig öffnen. In abgewandelter Ausführung kann das Fangelement 34 in Anlage an einen Entriegelungsfinger der Klinke 24 gelangen und diese mit der weiteren Schwenkbewegung aufziehen.

Im vorliegenden Ausführungsbeispiel sind die beiden Beschläge 5 auf den beiden Fahrzeugsitzseiten leicht unterschiedlich ausgebildet. Im folgenden ist die Freischwenkeinheit 12 des Beschlags 5 auf der einen Fahrzeugsitzseite weiter beschrieben.

Bei diesem Beschlag 5 ist am Beschlagoberteil 14, insbesondere auf dessen Kragen (oder sonstigen Absatz), (oder wahlweise an der Rastplatte 16) konzentrisch zur Achse A ein Schaltring 50 drehbar gelagert. Der Schaltring 50 ist in axialer Richtung zwischen der Rastplatte 16 und dem Beschlagoberteil 14 (d.h. innerhalb des oben genannten Bauraums) angeordnet. Der Schaltring 50 weist eine Schaltkontur 52 auf, vorliegend eine radial vorspringende Stufe, die im unteren Bereich des Beschlagoberteils 14 angeordnet ist. Der Schaltring 50 weist ferner einen radial abstehenden Schaltfinger 54 und eine ebenfalls radial abstehende Federeinhängung 56 auf, welche beide im oberen Bereich des Beschlagoberteils 14 angeordnet sind. An der Federeinhängung 56 ist das andere Ende der Fangfeder 40 eingehängt. Der Schaltfinger 54 befindet sich im Schwenkbereich des Fangelements 34, welches vorzugsweise einen radial abstehenden Betätigungsarm 34a zum Zusammenwirken mit dem Schaltfinger 54 aufweist. Am Beschlagoberteil 14 ist mittels eines Festlegebolzens 62 eine Festlegeklinke 64 schwenkbar gelagert. Die Festlegeklinke 64 ist mittels einer Festlegefeder 66 gegen den Schaltring 50 vorgespannt und liegt mit ihrem freien Ende innerhalb der Aussparung 16a am Schaltring 50 oder am Anschlag 17 an. Die letztgenannte Anlagemöglichkeit tritt in Abhängigkeit der mit dem Einstellbeschlag 11 eingestellten Neigung der Lehne 2 und gegebenenfalls der Taumelbewegung zwischen den Beschlagteilen des Einstellbeschlags 11 auf.

An dem auf dieser Fahrzeugsitzseite vorgesehenen Beschlagunterteil 9 ist in der Nachbarschaft des Anschlags 17 mittels eines zur Achse A parallelen Schaltbolzens 71 ein Schalthebel 73 schwenkbar gelagert. Eine Sicherungsscheibe 75 sichert den Schalthebel 73 auf dem Schaltbolzen 71. Eine als Schrauben-Zugfeder ausgebildete Schaltfeder 77 ist einerseits am Schalthebel 73 eingehängt und andererseits am Beschlagunterteil 9 befestigt, beispielsweise an einem Federbolzen 79 eingehängt, welcher vom Beschlagunterteil 9 parallel zum Schaltbolzen 71 absteht. Die Schaltfeder 77 spannt den Schalthebel 73 gegen den Anschlag 17 vor, wobei das freie Ende des Schalthebels 73 in direkter Nachbarschaft des Schaltrings 50 angeordnet ist.

Der Fahrzeugsitz 1 ist mittels eines Längseinstellers 81 längseinstellbar, d.h. in der Sitzlängsposition einstellbar. Der zwei Sitzschienenpaare aufweisende Längseinsteller 81 ist hierfür mittels eines Griffs 83 entriegelbar und verriegelt selbsttätig nach Loslassen des Griffs 83. Der Längseinsteller 81 wird aber auch beim Freischwenken der Lehne 2 entriegelt, so dass der Fahrzeugsitz 1 (mittels des Längseinstellers 81) nach vorne verfahrbar ist, um zusätzlich zum Freischwenken der Lehne 2 den Zugang zum Fond zu erleichtern. Das Entriegeln des Längseinstellers 81 erfolgt dabei direkt mittels des Freischwenk-Bedienelements 8 oder indirekt, indem beim Beschlag 5 auf der Fahrzeugsitzseite ohne Schaltring 50 anstelle desselben ein Entriegelungsring 84 vorsehen ist, welcher in an sich bekannter Weise beim Vorschwenken der Lehne 2 mitgenommen wird und dann mittels eines Bowdenzugs oder dergleichen die Verriegelung des Längseinstellers 81 ansteuert.

Eine Memoryvorrichtung des Längseinstellers 81, mittels welcher die vor dem Freischwenken eingestellte Sitzlängsposition (Memory-Position) auffindbar ist, steht mittels eines zweiten Seilzugs 89, vorzugsweise eines Bowdenzugs, in Wirkverbindung mit dem Beschlag 5, welcher den Schaltring 50 aufweist. Der zweite Seilzug 89 ist an einem Arm des Schalthebels 73 befestigt, d.h. die Memoryvorrichtung des Längseinstellers 81 steuert den Schalthebel 73 an, um die Festlegeklinke 64 freigeben zu können.

Das Freischwenken der Lehne 2, welches mittels des Freischwenk-Bedienelementes 8 ausgelöst wird, beginnt mit dem Entriegeln des Beschlagoberteils 14 auf beiden Fahrzeugsitzseiten. Die Klinke 24 wird auf die zuvor beschriebene Weise radial aus dem zweiten Rastanschlag 28 der Rastplatte 16 ausgehoben. Mit der Schwenkbewegung der Lehne 2 nach vorne gleitet die Festlegeklinke 64 mit ihrem freien Ende am Schaltring 50 entlang und erreicht dann den Anschlag 17. Eine schräge Kontur an der Festlegeklinke 64 sorgt dafür, dass die in Anlage an den Anschlag 17 gekommene Festlegeklinke 64 mit der weiteren Schwenkbewegung der Lehne 2 leicht aufschwenkt und auf der Unterseite des Anschlags 17 entlang gleitet.

Nach dem Passieren des Anschlags 17 springt für die Festlegeklinke 64 die Anlagekontur radial zurück. Durch ihre Vorspannung fällt die Festlegeklinke 64 nun hinter dem Anschlag 17 (radial nach innen) ein und hintergreift diesen mit einer Festlegeklinkenkontur 64a, und zwar außerhalb der Selbsthemmung. Dabei verdrängt sie den Schalthebel 73, welcher wiederum mit einer entsprechenden Schalthebelkontur 73a seinerseits die Festlegeklinke 64 hintergreift und vorzugsweise formschlüssig sichert. Die Schwenkbewegung der Lehne 2 ist beendet und das Beschlagoberteil 14 (und damit die Lehne 2) festgelegt. Die vorgeschwenkte Lehne 2 befindet sich nun in der freigeschwenkten Stellung, welche einen ungehinderten Zugang zum Fond erlaubt. Zugleich befindet sich der Fahrzeugsitz 1 in einer vorderen Sitzlängsposition.

Um in die zuvor eingenommene Gebrauchsstellung zurückzukehren, wird zunächst der Fahrzeugsitz 1 wieder nach hinten verfahren, beispielsweise durch Zug an der Lehne 2. Wenn die Memory-Position erreicht ist, verriegelt der Längseinsteller 81 und zieht dabei am zweiten Seilzug 89. Der zweite Seilzug 89 schwenkt nun den Schalthebel 73, welcher die Festlegeklinke 64 freigibt. Die Lehne 2 öffnet durch den Beginn ihre Rückwärts-Schwenkbewegung die Festlegeklinke 64 und kann dann ungehindert zurückgeschwenkt werden. Die Klinke 24 gelangt dann wieder zum zweiten Rastanschlag 28 und fällt bei Erreichen der zuvor eingenommene Gebrauchsstellung wieder hinter dem zweiten Rastanschlag 28 (radial nach innen) ein, so dass das Beschlagoberteil 14 und damit der Beschlag 5 wieder verriegelt ist. Der vom zweiten Seilzug 89 nicht weiter beaufschlagte Schalthebel 73 wird von der zugeordneten Schaltfeder 77 wieder in seine Ausgangsposition zurückgezogen.

Wenn die Memory-Position nicht erreicht wird, beispielsweise aufgrund von Gegenständen im Fußraum, kann - statt dem zuvor beschriebenen automatischen Öffnen - die Festlegung der Lehne 2 mittels des Freischwenk-Bedienelements 8 manuell geöffnet werden. Hierbei wird mittels des ersten Seilzugs 48 die Entriegelungswelle 32 gedreht, welche das Fangelement 34 schwenkt. Das Fangelement 34 drückt mittels seines Betätigungsarms 34a auf den Schaltfinger 54 des Schaltrings 50. Aufgrund einer dort vorgesehenen Schräge wird der Schaltring 50 gedreht, wodurch die Schaltkontur 52 in Anlage an den Schalthebel 73 kommt und diesen öffnet. Der Schalthebel 73 gibt dadurch die Festlegeklinke 64 frei. Wie zuvor beschrieben, kann nun die Lehne 2 zurückgeschwenkt werden.

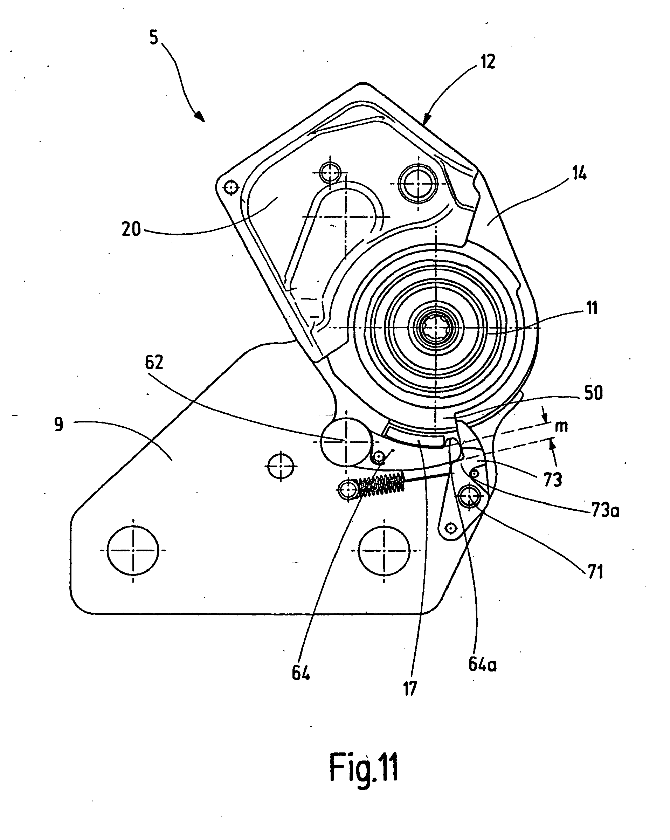

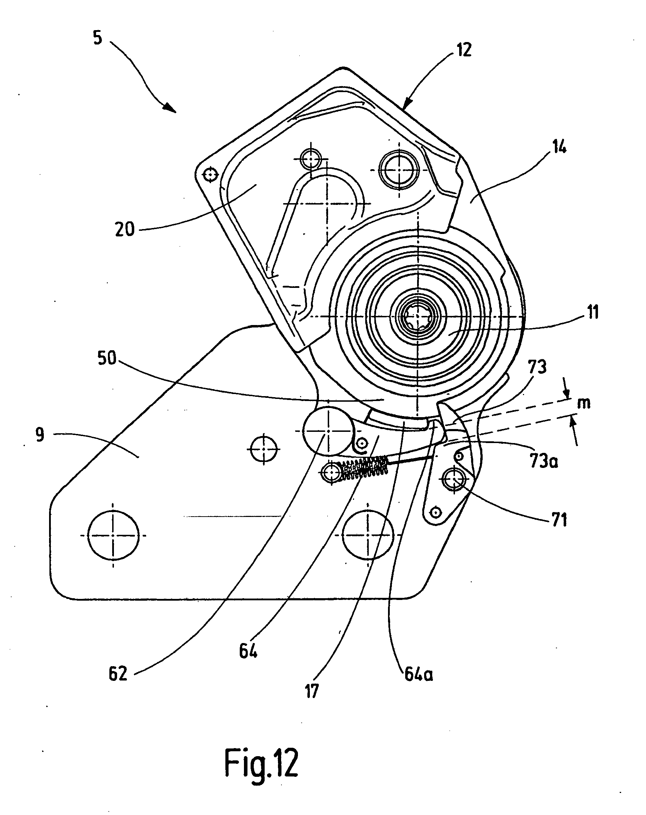

Das Festlegen des Beschlagoberteils 14 mittels der Festlegeklinke 64 in der freigesehwenkten Stelltung der Lehne 2 ist vorliegend so ausgelegt, dass die Taumelschleife des Einstellbeschlags 11 keinen Einfluss hat. Wie aus den Fig. 11 und 12 ersichtlich ist, nimmt der Festlegebolzen 62 aufgrund der Taumelschleife zwar unterschiedliche Positionen relativ zum Anschlag 17 ein. Jedoch wirkt sich dies für die Anlage der Festlegeklinke 64 am Anschlag 17 und für die Anlage des Sperrhebels 73 an der Festlegeklinke 64 nur im Winkel aus, was durch eine geeignete Ausformung der Festlegeklinkenkontur 64a und der Sperrhebelkontur 73a ausgeglichen wird. Letztendlich ergibt sich immer das gleiche Schließmaß m, d.h. der Abstand zwischen den beiden Anlagestellen (Festlegeklinke -Anschlag, Sperrhebel - Festlegeklinke) ist konstant.

### Bezugszeichenliste

- 1: Fahrzeugsitz
- 2: Lehne
- 3: Sitzteil
- 5: Beschlag
- 7: Handrad
- 8: Freischwenk-Bedienelement
- 9: Beschlagunterteil
- 11: Einstellbeschlag
- 12: Freischwenkeinheit
- 14: Beschlagoberteil
- 16: Rastplatte
- 16a: Aussparung
- 17: Anschlag
- 18: Haltescheibe
- 20: Deckel
- 22: Lagerbolzen
- 24: Klinke
- 26: erster Rastanschlag
- 28: zweiter Rastanschlag
- 30: Lagerbuchse
- 32: Entriegelungswelle
- 34: Fangelement
- 34a: Betätigungsarm
- 36: Spannelement
- 38: Spannfeder
- 40: Fangfeder
- 44: Schlitz-Zapfen-Führung
- 46: Entriegelungshebel
- 48: erster Seilzug
- 50: Schaltring
- 52: Schaltkontur
- 54: Schaltfinger
- 56: Federeinhängung
- 62: Festlegebolzen
- 64: Festlegeklinke
- 64a: Festlegeklinkenkontur
- 66: Festlegefeder
- 71: Schaltbolzen
- 73: Schalthebel
- 73a: Schalthebelkontur
- 75: Sicherungsscheibe
- 77: Schaltfeder
- 79: Federbolzen
- 81: Längseinsteller
- 83: Griff
- 84: Entriegelungsring
- 89: zweiter Seilzug
- A: Achse
- m: Schließmaß

## Patentansprüche

1. Verriegelungsvorrichtung, insbesondere für einen Fahrzeugsitz, mit einer Klinke (24) und einem Gegenelement, welche zum Verriegeln zusammenwirken, und mit einer Lagerbuchse (30), einer Entriegelungswelle (32), welche drehbar innen in der Lagerbuchse (30) gelagert ist, einem Fangelement (34) zum Abstützen der Klinke (24) im Crashfall und einem Spannelement (36) zum Sichern der verriegelten Klinke (24) im Normalfall, welches axial benachbart zum Fangelement (34) angeordnet, außen auf der Lagerbuchse (30) schwenkbar schwenkbar gelagert und vorgespannt ist, **dadurch gekennzeichnet, dass** das Fangelement (34) einteilig mit der Entriegelungswelle (32) ausgebildet ist.

2. Verriegelungsvorrichtung nach Anspruch 1, **dadurch gekennzeichnet, dass** das Fangelement (34) und das Spannelement (36) miteinander mittels einer Schlitz-Zapfen-Führung (44) mit einem Leerweg auf Mitnahme gekoppelt sind.

3. Verriegelungsvorrichtung nach einem der vorhergehenden Ansprüche, **dadurch gekennzeichnet, dass** die Verriegelungsvorrichtung Bestandteil eines Beschlags (5) für einen Fahrzeugsitz (1) mit einem Sitzteil (3) und einer Lehne (2) ist.

4. Verriegelungsvorrichtung nach Anspruch 3, **dadurch gekennzeichnet, dass** der Beschlag (5) versehen ist mit einem Einstellbeschlag (11) zur Neigungseinstellung der Lehne (2) relativ zum Sitzteil (3), einer Freischwenkeinheit (12) zum zentrischen Freischwenken der Lehne (2) von wenigstens einer Gebrauchsstellung in eine freigeschwenkte Stellung, was mittels eines Freischwenk-Be-dienelementes (8) ausgelöst wird, einem Beschlagunterteil (9), das mit dem Sitzteil (3) zu verbinden ist und das den Einstellbeschlag (11) trägt, und einem der Freischwenkeinheit (12) zugeordneten Beschlagoberteil (14), das mit der Lehne (2) zu verbinden ist und das in der Gebrauchsstellung mittels der Verriegelungsvorrichtung verriegelt ist.

5. Verriegelungsvorrichtung nach Anspruch 4, **dadurch gekennzeichnet, dass** die Verriegelungsvorrichtung Bestandteil der Freischwenkeinheit (12) ist, wobei die Klinke (24) schwenkbar am Beschlagoberteil (14) angelenkt ist, insbesondere mittels eines Lagerbolzens (22), und wobei die Lagerbuchse (30) drehfest im Beschlagoberteil (14) sitzt.

6. Verriegelungsvorrichtung nach Anspruch 5, **dadurch gekennzeichnet, dass** ein mit dem Beschlagoberteil (14) verbundener Deckel (20) die Verriegelungsvorrichtung abdeckt.

7. Verriegelungsvorrichtung nach Anspruch 5 oder 6, **dadurch gekennzeichnet. dass** die Freischwenkeinheit (12) eine Rastplatte (16) aufweist, welche mit dem Einstellbeschlag (11) verbunden ist und welche als Gegenelement mit der Klinke (24) verriegelt.

8. Verriegelungsvorrichtung nach einem der Ansprüche 4 bis 7, **dadurch gekennzeichnet, dass** zum Entriegeln des mittels der Verriegelungsvorrichtung verriegelten Beschlagoberteils (14) das Freischwenk-Bedienelement (8) betätigt wird, wodurch mittels eines ersten Seilzugs (48) und vorzugsweise eines drehfest auf der Entriegelungswelle (32) sitzenden Entriegelungshebels (46) die Entriegelungswelle (32) um ihre eigene Achse gedreht wird, worauf die Entriegelungswelle (32) das Fangelement (34) mitnimmt, welches wiederum mittels der Schlitz-Zapfen-Führung (44) - nach Durchfahren des Leerwegs - das Spannelement (36) mitnimmt, worauf die Klinke (24) freigegeben ist.

9. Verriegelungsvorrichtung nach einem der Ansprüche 4 bis 8, **dadurch gekennzeichnet, dass** eine Festlegeklinke (64) das Beschlagoberteil (14) in der freigeschwenkten Stellung der Lehne (2) am Beschlagunterteil (9) festlegt.

10. Verriegelungsvorrichtung nach Anspruch 9, **dadurch gekennzeichnet, dass** die das Beschlagoberteil (14) festlegende Festlegeklinke (64) mittels eines Längseinstellers (81) des Fahrzeugsitzes (1) und/oder mittels des Freischwenk-Bedienelements (8) zu öffnen ist.

## Claims

1. Locking device, in particular for a vehicle seat, comprising a latch (24) and a counter element, which interact for locking, a bearing bush (30), a release element (32) that is rotationally mounted inside the bearing bush (30), a catch element (34) for reinforcing the latch (24) in the event of a crash and a tightening element (36) for securing the locked latch (24) normally, which is arranged in an axial manner adjacent to said catch element (34), is mounted in a pivotable manner and prestressed on the outside on the bearing bush (30), **characterized in that** the catch element (34) is embodied as one piece with said release element (32).

2. Locking device according to Claim 1, **characterized in that** the catch element (34) and the tightening element (36) are coupled to one another to be carried along with free travel by means of a slotted pin guide (44).

3. Locking device according to one of the preceding claims, **characterized in that** the locking device is a component of a fitting (5) for a vehicle seat (1) comprising a seat part (3) and a backrest (2).

4. Locking device according to Claim 3, **characterized in that** the fitting (5) is provided with an adjustment fitting (11) for the inclination adjustment of the backrest (2) relative to the seat part (3), a freely-pivoting unit (12) for the centric free-pivoting of the backrest (2) from at least one position of use into a freely pivoted position, which is triggered by means of a freely-pivoting operating element (8), a fitting lower part (9) which may be connected to the seat part (3), and which carries the adjustment fitting (11) and a fitting upper part (14) associated with the freely-pivoting unit (12), which may be connected to the backrest (2) and which in the position of use is locked by means of the locking device.

5. Locking device according to Claim 4, **characterized in that** the locking device is a component of the freely-pivoting unit (12), the latch (24) being pivotably articulated to the fitting upper part (14), in particular by means of a bearing pin (22), and the bearing bush (30) being located fixedly in terms of rotation in the fitting upper part (14).

6. Locking device according to Claim 5, **characterized in that** a cover (20) connected to the fitting upper part (14) covers the locking device.

7. Locking device according to Claim 5 or 6, **characterized in that** the freely-pivoting unit (12) has a detent plate (16), which is connected to the adjustment fitting (11) and which is locked as a counter element to the latch (24).

8. Locking device according to one of Claims 4 to 7, **characterized in that** the freely-pivoting operating element (8) is actuated for unlocking the fitting upper part (14) locked by means of the locking device, as a result of which by means of a first control cable (48) and preferably an unlocking lever (46) located fixedly in terms of rotation on the release element (32), the release element (32) is rotated about its own axis, whereupon the release element (32) drives the catch element (34), which in turn drives the tightening element (36) by means of the slotted pin guide (44) - after passing the free travel - whereupon the latch (24) is released.

9. Locking device according to one of Claims 4 to 8, **characterized in that** a securing latch (64) secures the fitting upper part (14) in the freely-pivoted position of the backrest (2) to the fitting lower part (9).

10. Locking device according to Claim 9, **characterized in that** the securing latch (64) securing the fitting upper part (14) may be opened by means of a longitudinal adjuster (81) of the vehicle seat (1) and/or by means of the freely-pivoting operating element (8).

## Revendications

1. Dispositif de verrouillage, en particulier pour un siège de véhicule, comprenant un cliquet (24) et un élément conjugué, lesquels coopèrent pour assurer le verrouillage, et comprenant une douille de palier (30), un arbre de déverrouillage (32) monté de manière à pouvoir tourner à l'intérieur de la douille de palier (30), un élément de retenue (34) pour supporter le cliquet (24) en cas de collision et un élément de serrage (36) pour fixer le cliquet verrouillé (24) dans une situation normale, lequel élément de serrage est disposé de manière axialement adjacente à l'élément de retenue (34), est supporté de manière pivotante et est précontraint à l'extérieur sur la douille de palier (30), **caractérisé en ce que** l'élément de retenue (34) est réalisé d'une seule pièce avec l'arbre de déverrouillage (32).

2. Dispositif de verrouillage selon la revendication 1, **caractérisé en ce que** l'élément de retenue (34) et l'élément de serrage (36) sont accouplés l'un à l'autre par entraînement avec une course à vide au moyen d'un guidage par fente et tourillon (44).

3. Dispositif de verrouillage selon l'une quelconque des revendications précédentes, **caractérisé en ce que** le dispositif de verrouillage fait partie d'une ferrure (5) pour un siège de véhicule (1) avec une partie de siège (3) et un dossier (2).

4. Dispositif de verrouillage selon la revendication 3, **caractérisé en ce que** la ferrure (5) est pourvue d'une ferrure d'ajustement (11) pour l'ajustement d'inclinaison du dossier (2) par rapport à la partie de siège (3), d'une unité de pivotement libre (12) pour le pivotement libre central du dossier (2) depuis au moins une position d'utilisation dans une position librement pivotée, ce qui est déclenché au moyen d'un élément de commande de pivotement libre (8), d'une partie inférieure de ferrure (9), qui doit être connectée à la partie de siège (3) et qui porte la ferrure d'ajustement (11), et d'une partie supérieure de ferrure (14) associée à l'unité de pivotement libre (12), laquelle doit être connectée au dossier (2) et est verrouillée dans la position d'utilisation au moyen du dispositif de verrouillage.

5. Dispositif de verrouillage selon la revendication 4, **caractérisé en ce que** le dispositif de verrouillage fait partie de l'unité de pivotement libre (12), le cliquet (24) étant articulé de manière pivotante à la partie supérieure de ferrure (14), notamment au moyen d'un boulon de palier (22), et la douille de palier (30) reposant de manière solidaire en rotation dans la partie supérieure de ferrure (14).

6. Dispositif de verrouillage selon la revendication 5, **caractérisé en ce qu'**un couvercle (20) connecté à la partie supérieure de ferrure (14) recouvre le dispositif de verrouillage.

7. Dispositif de verrouillage selon la revendication 5 ou 6, **caractérisé en ce que** l'unité de pivotement libre (12) présente une plaque d'encliquetage (16) qui est connectée à la ferrure d'ajustement (11) et qui se verrouille au cliquet (24) en tant qu'élément conjugué.

8. Dispositif de verrouillage selon l'une quelconque des revendications 4 à 7, **caractérisé en ce que** pour le déverrouillage de la partie supérieure de ferrure (14) verrouillée au moyen du dispositif de verrouillage, l'élément de commande de pivotement libre (8) est actionné, de sorte qu'au moyen d'un premier câble Bowden (48) et de préférence d'un levier de déverrouillage (46) situé de manière solidaire en rotation sur l'arbre de déverrouillage (32), l'arbre de déverrouillage (32) soit tourné autour de son propre axe, de sorte que l'arbre de déverrouillage (32) entraîne l'élément de retenue (34), lequel entraîne à son tour, au moyen du guidage par fente et tourillon (44), après avoir parcouru la course à vide, l'élément de serrage (36), après quoi le cliquet (24) est libéré.

9. Dispositif de verrouillage selon l'une quelconque des revendications 4 à 8, **caractérisé en ce qu'**un cliquet de fixation (64) fixe la partie supérieure de ferrure (14) dans la position pivotée librement du dossier (2) au niveau de la partie inférieure de ferrure (9).

10. Dispositif de verrouillage selon la revendication 9, **caractérisé en ce que** le cliquet de fixation (64) fixant la partie supérieure de ferrure (14) doit être ouvert au moyen d'un dispositif d'ajustement longitudinal (81) du siège de véhicule (1) et/ou au moyen de l'élément de commande de pivotement libre (8).
